# EUROPÄISCHE PATENTSCHRIFT

(11) **EP 1 364 516 B1**
(45) Veröffentlichungstag und Bekanntmachung des Hinweises auf die Patenterteilung: **14.02.2007**
(21) Anmeldenummer: 01971598.6
(22) Anmeldetag: 10.10.2001
(51) Int. Cl.: H04L 29/08, H04L 12/24, H04L 29/06, H04L 12/26

(54) **VERFAHREN UND VORRICHTUNG ZUR PRÜFUNG EINES WAP-ENDGERÄTE UNTERSTÜTZENDEN NETZWERKS**
METHOD AND DEVICE FOR CHECKING A NETWORK SUPPORTING WAP TERMINALS
PROCEDE ET DISPOSITIF DE VERIFICATION D'UN RESEAU SUPPORTANT DES TERMINAUX WAP

(30) Priorität: 20.02.2001 CH 294012001
(43) Veröffentlichungstag der Anmeldung: 26.11.2003
(73) Patentinhaber: Ascom AG, 3000 Bern 14 (CH)
(72) Erfinder: SINGEISEN, Felix, CH-4512 Bellach (CH)
(74) Vertreter: Rutz & Partner
(86) Internationale Anmeldenummer: PCT/CH2001/000612
(87) Internationale Veröffentlichungsnummer: WO 2002/067546

(56) Entgegenhaltungen:
- DE-A- 19 937 753
- IBM: "Dynamic Test Methodology for Programs Involving Request and Response Modifications" RESEARCH DISCLOSURE, Nr. 442, 1. Februar 2001 (2001-02-01), Seite 280 XP002171059 Havant, UK, article No. 442111
- KING A ET AL: "Protocols and architecture for managing TCP/IP network infrastructures" COMPUTER COMMUNICATIONS,ELSEVIER SCIENCE PUBLISHERS BV, AMSTERDAM,NL, Bd. 23, Nr. 16, 30. September 2000 (2000-09-30), Seiten 1558-1572, XP004217232 ISSN: 0140-3664
- ANONYMOUS: "WAP-195-WAEOverview;version 29-03-2000" WIRELESS APPLICATION PROTOCOL FORUM, 29. März 2000 (2000-03-29), XP002155622

## Beschreibung

Die Erfindung betrifft ein Verfahren und eine Vorrichtung zur Prüfung, gegebenenfalls Überwachung eines Netzwerks, das gemäss dem Wireless Application Protokoll WAP arbeitende Endgeräte unterstützt, nach dem Oberbegriff des Patentanspruchs 1 bzw. 10.

Die WAP-Technologie verbindet zwei rasch wachsende Netzwerktechnologien, nämlich die des Internets und des Mobilfunks. Ziel der Entwicklung der WAP-Technologie war es, die auf grösseren Desktop oder Notebook Computern darstellbaren Internet Informationen, die auf Internet- bzw. Web-Servern gespeichert sind, auch den Benutzern von kleineren mobilen Kommunikationsendgeräten und Computern, wie Mobiltelefonen oder elektronischen Taschencomputern, zugänglich zu machen.

Für die Kommunikation über eine End-End Verbindung zwischen einem WAP-Endgerät und einem Internet Server werden fünf logische Komponenten benötigt. Ein als Client dienendes WAP-Endgerät, das zur Abfrage und Abgabe von WAP Inhalten geeignet ist. Ein Mobilfunknetz, welches ein aktuelles WAP-Protokoll unterstützt. Einen Gateway, der geeignet ist WAP-Protokoll-Abfragen, nachstehend WAP-Reguests genannt, in Requests umzuwandeln, die dem dazu korrespondierenden, im Internet verwendeten Protokoll, beispielsweise dem Hyper-Text Transfer Protokoll HTTP entsprechen und der ferner geeignet ist, Antworten, nachstehend Responses, aus dem Internet in Responses zu konvertieren, die dem WAP Protokoll entsprechen. Eine weitere Komponente ist ferner das Internet oder ein Intranet, das nach den Internetprotokollen TCP/IP arbeitet, die beispielsweise in [1], Jerry D. Gibson, THE COMMUNICATIONS HANDBOOK, auf Seiten 702 - 704 oder in [2], Andrew S. Tanenbaum, Computernetzwerke, IP (Internet Protokoll) auf Seiten 442-450 und TCP (Transport Control Protocol) auf Seiten 556-570 beschrieben sind.

Die End-End Verbindung umfasst ferner einen als Origin Server bezeichneten Web-Server, der die abgefragten Inhalte bereitstellt und gegebenenfalls über sogenannte Proxy-Server und den WAP-fähigen Gateway zum WAP-Endgerät übermittelt.

Die WAP-Protokollarchitektur, die in [3] bzw. der 1998 vom Wireless Application Protocol Forum herausgegebenen "Wireless Application Protocol Architecture Specification" auf Seiten 15-18 oder in [4] bzw. in R. Sellin, Neue mobile Perspektiven mit WAP und GPRS, Der Fernmeldeingenieur, Heft 5/'00 auf Seiten 9-15 beschrieben ist, umfasst einen nach dem Wireless Datagram Protocol WDP oder dem User Datagram Protocol UDP arbeitenden Transport Layer, der auf einen von verschiedenen möglichen Trägerdiensten (GSM, GPRS, IS-136, CDMA, PHS, etc.) aufsetzt und die oberen WAP-Schichten, die gegebenenfalls verwendete Sicherheitsschicht WTLS (Wireless Transport Layer Security), die Transaktionsschicht WTP (Wireless Transaction Protocol), die Sitzungsschicht WSP (Wireless Session Protocol) und die zuoberst vorgesehene Applikationsschicht WAE (Wireless Application Environment) gewissermassen vom Mobilfunknetz abschirmt.

Gemäss Ermittlungen Internationaler Institute verdoppelt sich die Zahl der Mobilfunkteilnehmer etwa alle zwanzig Monate. Ein grosser Anteil der Mobilfunkteilnehmer nutzt ferner die Internetdienste. Es ist daher zu erwarten, dass sich die Verbreitung von WAP-Endgeräten in Zukunft rasant fortsetzen wird (siehe [4], Seite 18).

Die Betreiber von Mobilfunknetzen und Festnetzen sowie Gateways, Proxy-Servern und Origin Servern stehen daher vor der Herausforderung, mit dieser Entwicklung Schritt zu halten, um den Mobilteilnehmern auch in Zukunft die benötigten Infrastrukturen in entsprechender Qualität bereitstellen zu können. Einerseits sollen Kapazitätsengpässe vermieden werden, die zu langen Übertragungs- und Responsezeiten, tiefen Datenraten, Datenverlusten oder fehlender Verfügbarkeit und Erreichbarkeit des Origin-Servers führen können. Aus wirtschaftlichen Gründen sollen jedoch auch Überkapazitäten vermieden, die hohe Kosten für den Netzbetreiber verursachen und den Anwendern nur geringen Nutzen bringen.

In der Praxis werden Netzbetreiber oder weitere Dienstleister oft durch sich rasch ändernde Strukturen oder ein verändertes Verhalten der Teilnehmer überrascht, so, dass Massnahmen zur Anpassung der Infrastruktur erst dann ergriffen werden, nachdem durch Überlastung des verwalteten Netzes oder Teilsystemen davon entsprechende Anfragen der Teilnehmer bzw. der Kunden vorliegen. Eine zeitgerechte Planung für den kontrollierten Ausbau der Ressourcen in diesen dynamisch wachsenden Netzwerkssystemen ist jedoch mit den bestehenden Mitteln schwierig durchzuführen.

Aufgrund der Komplexität moderner Netzwerke und der darin ablaufenden dynamischen Vorgänge genügt es oft nicht, wie in [7], DE 199 37 753 A1 angegeben, nur die Einrichtungen innerhalb des betreffenden Netzwerks zu testen. Die Funktion individueller Netzwerkeinheiten gemäss den Herstellerangaben gewährleistet nämlich noch keine einwandfreie Funktion eines komplexen Netzwerks.

Das Testen von Programmen auf der Applikationsebene eines mobile WAP-Endgeräte unterstützenden Netzwerks, wie in [B], IBM: "Dynamic Test Methodology for Programs Involving Request and Response Modifications", Research Disclosure, Nr. 442, 2001-02-01, Seite 280, XP002171059 Havant, UK, article No. 442111 angegeben, durch Kalkulation, von erwarteten Responses und deren Vergleich mit den tatsächlich eintreffenden Responses, erlaubt ebenfalls nicht das Testen des Netzwerks, sondern nur der Programme.

Der vorliegenden Erfindung liegt daher die Aufgabe zugrunde, ein zum Prüfen eines mobile WAP-Endgeräte unterstützenden Netzwerks geeignetes Verfahren und eine Vorrichtung anzugeben.

Diese Aufgabe wird mit einem Verfahren und einer Vorrichtung nach Anspruch 1 bzw. 10 gelöst. Das Verfahren und die Vorrichtung dienen zur Prüfung, gegebenenfalls der Überwachung des Zustand-eines mobile WAP-Endgeräte unterstützenden Netzwerks oder Teilen davon.

Das erfindungsgemässe Verfahren erlaubt die rasche Feststellung des Zustandes und von Veränderungen des geprüften Netzwerks und angebotener Dienstleistungen sowie die Lokalisierung von Ursachen festgestellter Veränderungen. Das zu prüfende bzw. überwachte Netzwerk besteht aus einem mobilen, das Wireless Application Protokoll WAP unterstützenden Netzwerk PLMN (Public Land Mobile Radio Network) und einem nach den Internetprotokollen TCP/IP arbeitenden Netzwerk, die über einen Gateway miteinander verbunden sind, welcher die Protokolle der WAP-Endgeräte unterstützt. Möglich ist ferner die Überwachung von Teilen des Netzwerks. Ferner lassen sich einzelne Komponenten des Netzwerks, insbesondere die fünf logischen Komponenten einer End-End Verbindung von einem WAP-Endgerät zu einem Origin-Server überprüfen und überwachen.

Die Durchführung der Prüfung und Überwachung des Netzwerks bzw. die Integration eines erfindungsgemässen Messsystems ist einfach möglich, ohne Änderungen der Hardware oder Software des geprüften Systems durchzuführen. Die erfindungsgemässe Prüfvorrichtung, die kostengünstig aufgebaut ist, verursacht während dem Betrieb zudem keine Leistungsreduktion des Systems.

Die Prüfvorrichtung erlaubt auch die Prüfung der von den Mobilteilnchmern genutzten Anwendungen und gibt daher allen an einer End-End Verbindung sowie an der Nutzung und Bereitstellung von Dienstleistungen beteiligten Parteien, den Dienstleistern, Netzbetreibern und Mobilteilnehmern bzw. Endbenutzern wertvolle Informationen die zur Optimierung des Netzwerks und der Dienstleistungen verwendbar sind.

Nachfolgend wird die Erfindung anhand von Zeichnungen näher erläutert. Dabei zeigt :
- Fig. 1: ein zu prüfendes Netzwerk mit installierter Prüfvorrichtung, bei der Testmeldungen mittels eines WAP-Endgeräts WAP-MS ausgelöst und über ein Mobilfunknetz PLMN, einen WAP-Gateway WAP-GW sowie das Internet zu einem Web-Server WEB-SRV übertragen werden;
- Fig. 2: ein zu prüfendes Netzwerk mit installierter Prüfvorrichtung, bei der Testmeldungen bei einem Server ASRV des Mobilfunknetzes PLMN oder beim WAP-Gateway WAP-GW ausgelöst werden;
- Fig. 3: die Darstellung des Datenflusses bei der Übertragung von Meldungen zwischen dem WAP-Endgerät WAP-MS und dem Web-Server WEB-SRV bei verbindunglosem Datenverkehr im Mobilfunknetz PLMN;
- Fig. 4: die Darstellung des Datenflusses bei der Übertragung von Meldungen zwischen dem WAP-Endgerät und dem Web-Server WEB-SRV bei verbindungsorientiertem Datenverkehr über logische Verbindungen im Mobilfunknetz PLMN;
- Fig. 5: den Aufbau einer mobilen Testeinheit MTC sowie die wesentlichen Module der darin verwendeten Testapplikation;
- Fig. 6: den Aufbau einer stationären Testeinheit STC, die mit einem WAP-Gateway WAP-GW verbunden ist;
- Fig. 7: die Protokollarchitektur des WAP-Gateways WAP-GW von Figur 6 und
- Fig. 8: den Aufbau eines für die Prüfvorrichtung vorgesehenen Managementsystems MMS sowie die wesentlichen Module der darin verwendeten Managementapplikation

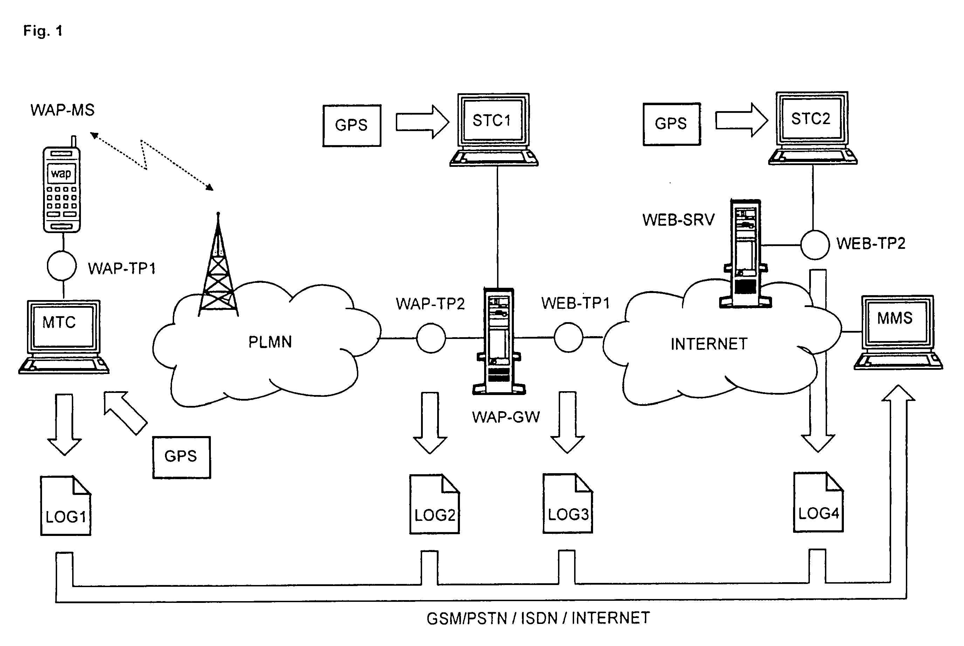

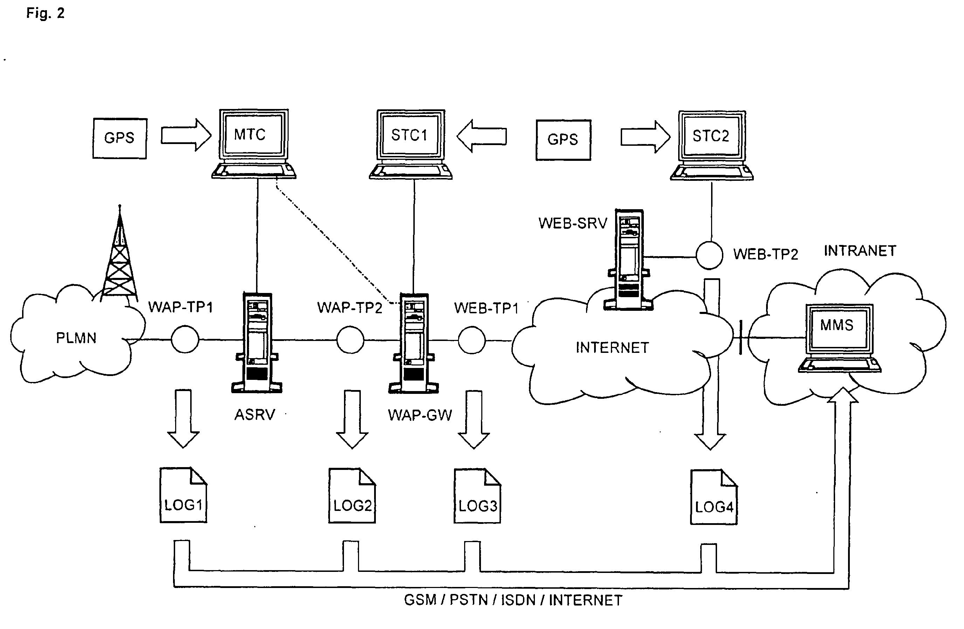

Figur 1 zeigt ein zu prüfendes Netzwerk mit installierter Prüfvorrichtung, bei der Testmeldungen mittels eines WAP-Endgeräts WAP-MS ausgelöst und über ein Mobilfunknetz PLMN, einen WAP-Gateway WAP-GW sowie das Internet zu einem Web-Server WEB-SRV übertragen werden. In Figur 1 und 2 sind Testpunkte WAP-TP1, WAP-TP2, WEB-TPL und WEB-TP2 (optional) symbolisch eingezeichnet, an denen Daten gegebenenfalls parallel laufender Testsequenzen registriert und in entsprechenden Log-Dateien LOG1, ..., LOG4 gespeichert werden. Tatsächlich erfolgt die Erfassung der Daten innerhalb der entsprechenden Server und Netzknoten durch Eingriff in die Protokollarchitektur des Übertragungssystems.

Der prinzipielle Aufbau dieses aus einem WAP-Endgerät WAP-MS, einem WAP-Gateway WAP-GW, einem Web-Server WEB-SRV und den dazwischen liegenden Netzwerken bestehenden Übertragungssystems ist in [3], auf Seiten 12-13 oder in[4], auf Seiten 9-15 beschrieben. Das WAP-Programmiermodell basiert auf ähnlichen Prinzipien wie das WWW-Programmiermodell. Die WAP-Architektur stellt eine Client-Server Architektur dar. Der Benutzer fordert mit einem im WAP-Endgerät WAP-MS vorgesehenen Browser mittels Angabe einer URL (Uniform Resource Locater) via den WAP Gateway WAP-GW Informationen von einem vernetzten Web-Server WEB-SRV an und erhält als Antwort den Inhalt der mittels der URL adressierten Seite.

Aufgrund von Beschränkungen der mobilen WAP-Endgeräte, insbesondere der kleinen Anzeige und Tastatur sowie reduzierten Prozessorleistungen, wird im WAP-Endgerät WAP-MS ein Micro-Browser verwendet. Die Informationen aus dem World Wide Web (WWW) müssen daher derart aufbereitet werden, dass sie vom Micro-Browser interpretiert und lesbarer Form dargestellt werden können. Die Anfragen vom WAP-Endgerät WAP-MS an den WAP-Gateway WAP-GW und die Antworten vom WAP-Gateway WAP-GW an das WAP-Endgerät WAP-MS sind speziell codiert, um der WAP-Umgebung Rechnung zu tragen. Der WAP-Gateway WAP-GW stellt Anfragen gemäss den im Internet verwendeten Protokollen an den Web-Server WEB-SRV, der die angefragten Inhalte gegebenenfalls über ein Common Gateway Interface CGI bereitstellt und mittels einer Response zum WAP-Gateway WAP-GW überträgt, der im wesentlichen als Protokoll Gateway arbeitet.

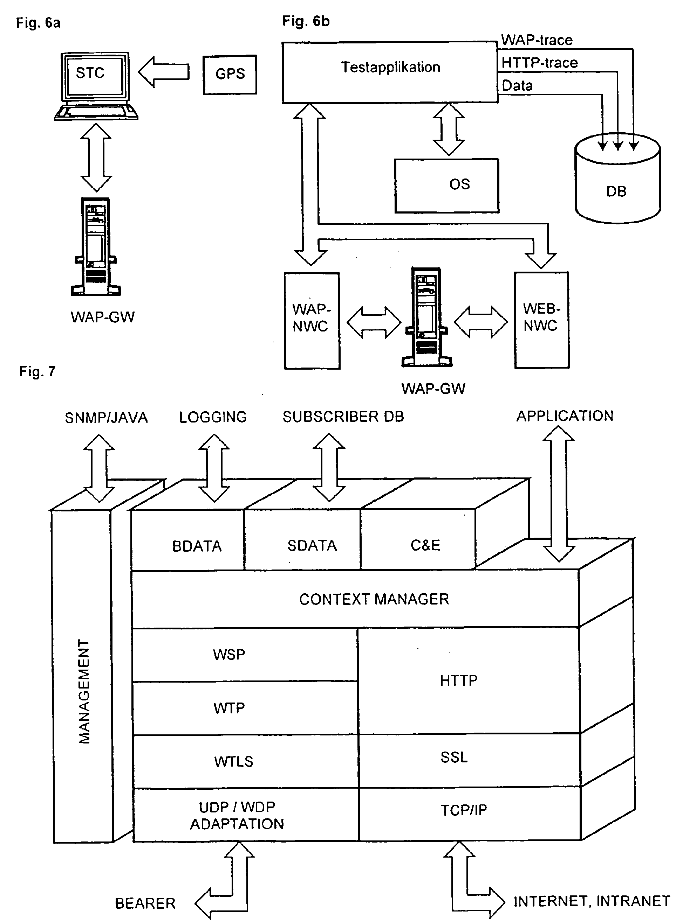

Wie in Figur 7 gezeigt übersetzt der WAP-Gateway WAP-GW die Requests und Responses vom WAP-Protokollstack bestehend aus einem nach dem Wireless Datagram Protocol WDP oder dem User Datagram Protocol UDP arbeitenden Transport Layer, einer Sicherheitsschicht WTLS (Wireless Transport Layer Security), einer Transaktionsschicht WTP (Wireless Transaction Protocol) und einer Sitzungsschicht WSP (Wireless Session Protocol) in den WWW-Protokollstack bestehend aus dem Hyper-Text Transfer Protokoll HTTP und den Internetprotokollen TCP/IP. Das User Datagram Protocol UDP, das in [2], auf Seiten 576-578 beschrieben ist, ist ein Transportprotokoll für die verbindungslose Datenübertragung und erlaubt somit, IP-Datagramme zu übertragen, ohne eine Verbindung aufzubauen (siehe auch [3], Seite 18).

Wie bereits oben erwähnt ist der Transport Layer WDP/UDP an einen von verschiedenen möglichen Trägerdiensten (GSM, GPRS, IS-136, CDMA, PHS, etc.) des Mobilfunknetzes adaptiert (siehe [3], Seiten 15-18). Vorgesehen ist ferner ein Rechnungs- und eine Teilnehmerverwaltungsmodul BDATA, SDATA sowie eine Encoder & Decoder Einheit C&E, welche WAP-Inhalte vor der Übertragung ins Mobilfunknetz PLMN in kompakte Formate von reduziertem Umfang übersetzt. Vom Web-Server WEB-SRV zum WAP-Endgerät WAP-MS werden die Formate der übertragenen Inhalte daher zweifach umgewandelt, sofern die Inhalte auf dem Web-Server WEB-SRV im HTML-Format abgelegt sind. In einem optional vorgesehenen HTML-Filter werden die vom Web-Server WEB-SRV im HTML (Hyper Text Markup Language) Format abgegebenen Inhalte in das WML (Wireless Markup Language) Format umgewandelt, das vor der Übertragung über das Mobilfunknetz PLMN in ein binäres Format respektive in Binary WML übersetzt wird. Die meisten Dienstanbieter ziehen es jedoch vor, ihre Inhalte direkt im WML-Format auf einem Web-Server abzulegen, so dass kein HTML-Filter benötigt wird. Auf diese Weise können sie den Inhalt und die Präsentation ihrer Informationen und Angebote genau bestimmen. Auf die Umwandlung von HTML-formatierten Inhalten hat der Dienstanbieter hingegen keinen Einfluss. Jede Umwandlung in einem HTML-Filter verursacht zudem einen Zeitverlust bei der Übertragung der Inhalte.

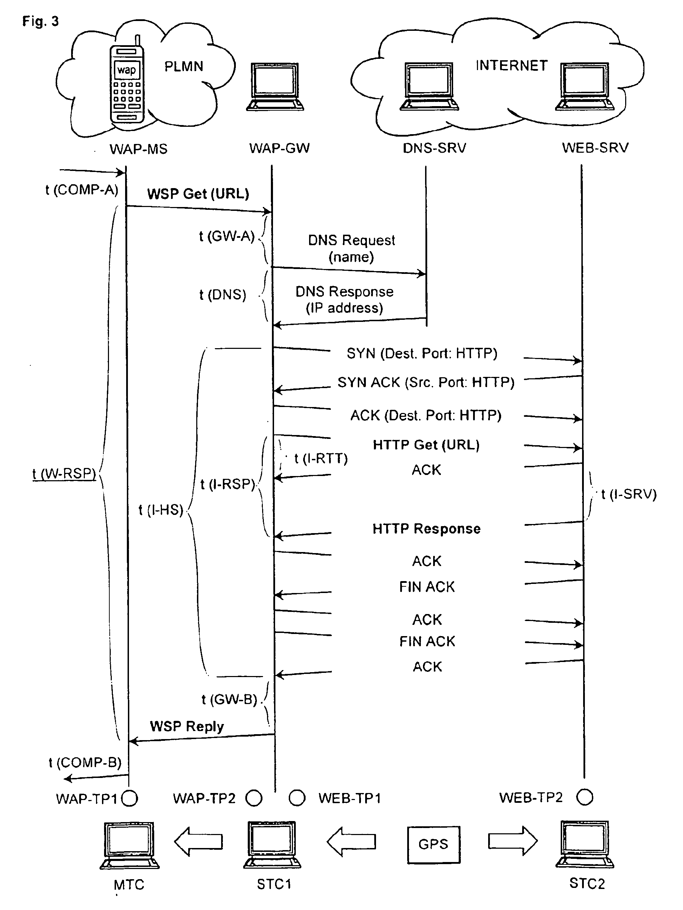

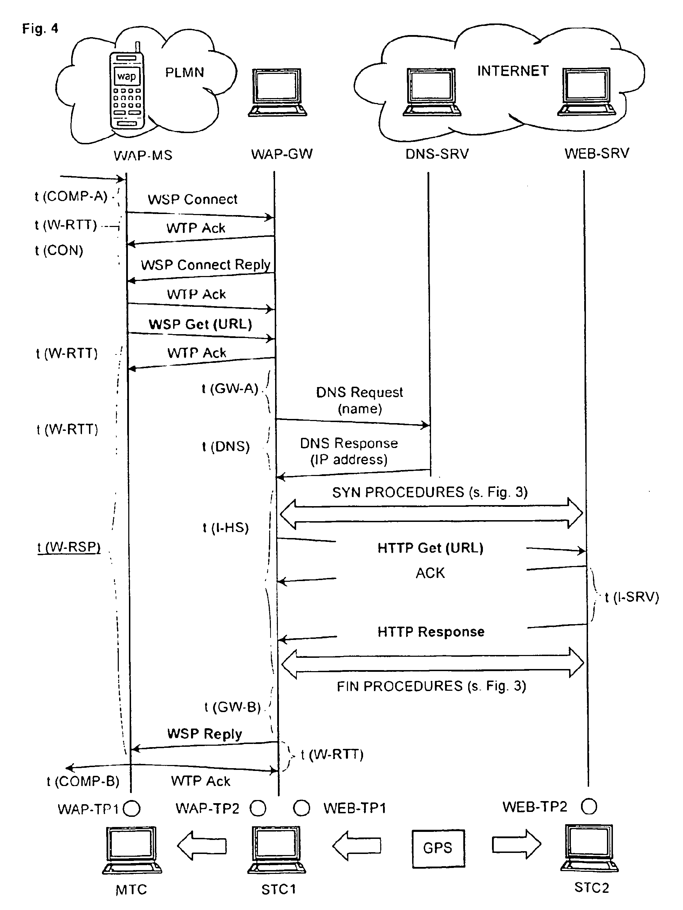

Verzögerungen bei der Datenübertragung innerhalb der beschriebenen Client/Server Verbindung zwischen dem WAP-Endgerät WAP-MS und einem Origin Server bzw. dem in Figur 1 beispielsweise gezeigten Web-Server WEB-SRV treten jedoch nicht nur im WAP-Gateway WAP-GW (oder einem funktionsgleichen Proxy Server) auf (siehe Figuren 3 und 4, Verzögerungen t(GW-A), t(GW-B)).

Verzögerungen treten auch innerhalb des Mobilfunknetzes und innerhalb des Internet auf. Von Bedeutung sind die Verzögerungszeiten für die Übertragung einer Meldung vom WAP-Endgerät WAP-MS zum WAP-Gateway WAP-GW bzw. vom WAP-Gateway WAP-GW zum Web-Server WEB-SRV und wieder zurück. Diese Verzögerungszeiten, die insbesondere von den gewählten Routen bzw. Übertragungswege innerhalb der Netzwerke abhängig sind, sind in den Figuren 3 und 4 als Roundtrip-Zeiten t(W-RTT) bzw. t(I-RTT) bezeichnet. Wesentlich sind ferner die Antwortzeiten t(I-SRV), t(DNS) der Internet Server, des Origin bzw. Web-Servers WEB-SRV und gegebenenfalls eines DNS-Servers DNS-SRV, von dem zu Domain Namen korrespondierende IP-Adressen abrufbar sind. Die vom Web-Server WEB-SRV verursachte Verzögerung ist in den Figuren 3 und 4 grau markiert. Auch bei der Verarbeitung der Meldungen innerhalb des WAP-Endgeräts WAP-MS treten Verzögerungen t(COMP-A), t(COMP-B) auf. Sofern innerhalb des Mobilfunknetzes PLMN eine logische bzw. verbindungsorientierte Verbindung verwendet wird, ist ferner die Verbindungsaufbauzeit t(CON) zu berücksichtigen (siehe Figur 4), die abhängig vom gewählten Trägerdienst (GSM, GPRS, etc.) ist.

In Figur 3 ist der Verlauf des Datenflusses innerhalb des zu prüfendes Netzwerks von Figur 1 für eine vom WAP-Endgerät initialisierte Abfrage gezeigt, bei der keine verbindungsorientierte Verbindung im Mobilfunknetz PLMN verwendet wird.

Vom WAP-Endgerät WAP-MS wird ein mit einer URL versehener WAP-Request WSP Get (URL) abgegeben, der im WAP-Gateway WAP-GW innerhalb der Verzögerungszeit t(GW-A) durch Protokollumwandlung ins HTTP-Format übersetzt wird. Sofern nicht bereits vorhanden, wird vom DNS-Server DNS-SRV die zu dem in der URL enthaltenen Domain Namen korrespondierende IP-Adresse abgefragt.

Anschliessend erfolgt der Verbindungsaufbau zwischen dem WAP-Gateway WAP-GW und dem Web-Server WEB-SRV gemäss den Bestimmungen des Internet Transport Control Protocols TCP. Der Aufbau und Abbau von Verbindungen anhand des TCP-Verbindungsmanagements ist beispielsweise in [2], auf Seiten 558-576 beschrieben. Durch das Setzen von SYN- und FIN-Bits im Kopf von übertragenen TCP-Segmenten wird den Partnereinheiten mitgeteilt, dass eine Verbindung auf- oder abgebaut werden soll, was durch Setzen eines ACK-Bits in einem nachfolgend retournierten TCP-Segment bestätigt wird.

Nach dem Aufbau der Verbindung überträgt der WAP-Gateway WAP-GW den übersetzten WAP-Request bzw. den resultierenden HTTP-Request HTTP Get (URL) zum Web-Server WEB-SRV, der die angeforderten Inhalte bereitstellt und nach einer Verzögerungszeit t(I-SRV) mittels einer HTTP-Response zum WAP-Gateway WAP-GW überträgt. Die Zeit zwischen dem Absenden des HTTP-Requests und dem Empfang der HTTP-Response ist in Figur 3 mit t(I-RSP) bezeichnet und setzt sich aus der Rountrip-Zeit im Internet t(I-RTT) und der Antwortzeit des Web-Servers t(I-SRV) zusammen. Nach Übertragung der HTTP-Response wird die TCP-Verbindung wieder abgebaut. Die Zeit vom Beginn des Verbindungsaufbaus bis zum Ende des Verbindungsaufbaus entspricht dabei der HTTP-Sitzungs- bzw. Session Zeit t(I-HS).

Im WAP-Gateway WAP-GW wird die HTTP-Response, wie oben beschrieben, übersetzt und nach der Verarbeitungszeit t(GW-B) eine entsprechende WSP Reply zum WAP-Endgerät WAP-MS gesandt, die nach einer Verarbeitungszeit t(COMP-B) auf dem Display des Endgerätes WAP-MS angezeigt wird.

Die Zeit von der Abgabe des WAP-Requests bis zum Empfang der WAP-Reply ist in Figur 3 als WAP-Response- bzw. Antwortzeit t(W-RSP) eingetragen, die einschliesslich der Verarbeitungszeiten t(COMP-A) und t(COMP-B) im WAP-Endgerät WAP-MS der vom Anwender festgestellten Antwortzeit entspricht.

In Figur 4 ist der Verlauf des Datenflusses innerhalb des zu prüfendes Netzwerks von Figur 1 für eine vom WAP-Endgerät initialisierte Abfrage gezeigt, bei der eine logische bzw. verbindungsorientierte Verbindung im Mobilfunknetz PLMN verwendet wird. Im Vergleich zum Datenfluss von Figur 3 tritt bei diesem Datenfluss eine zusätzliche Verzögerung t(CON) zum Aufbau der logischen Verbindung. (Die Prinzipien der leitungsvermittelten verbindungsorientierten, der paketvermittelten verbindungsorientierten oder der paketvermittelten verbindungslosen Datenübertragung sind beispielsweise in [6], auf Seiten 4-6 beschrieben.)

Die Vorrichtung zur Prüfung, gegebenenfalls Überwachung des in Figur 1 gezeigten Netzwerks, das nach dem Wireless Application Protokoll WAP arbeitende WAP-Endgeräte WAP-MS unterstützt, weist ein Managementsystem MMS auf, das über einen Kommunikationskanal beispielsweise des öffentlichen Telefonnetzes GSM/PSTN/ISDN oder über das Internet mit einer mobilen Testeinheit MTC sowie mit wenigstens einer ersten und gegebenenfalls einer zweiten stationären Testeinheit STC1, STC2 verbunden ist, die im wesentlich aus einem Rechner, beispielsweise einem portablen Computer, bestehen, der mit Testsoftware und den gegebenenfalls notwendigen Schnittstellen- und/oder Netzwerkkarten versehen ist.

Die mobilen und stationären Testeinheiten MTC, STC1, STC2 weisen zudem eine als gemeinsame Zeitbasis dienende Zeitgabeeinheit GPS auf, mittels der Messdaten mit Zeitinformationen verknüpft werden können. Vorzugsweise dient das Global Positioning System, das in [5], Richard C. Dorf, THE ELECTRICAL ENGINEERING HANDBOOK, Seite 2486 beschrieben ist, als Zeitreferenz.

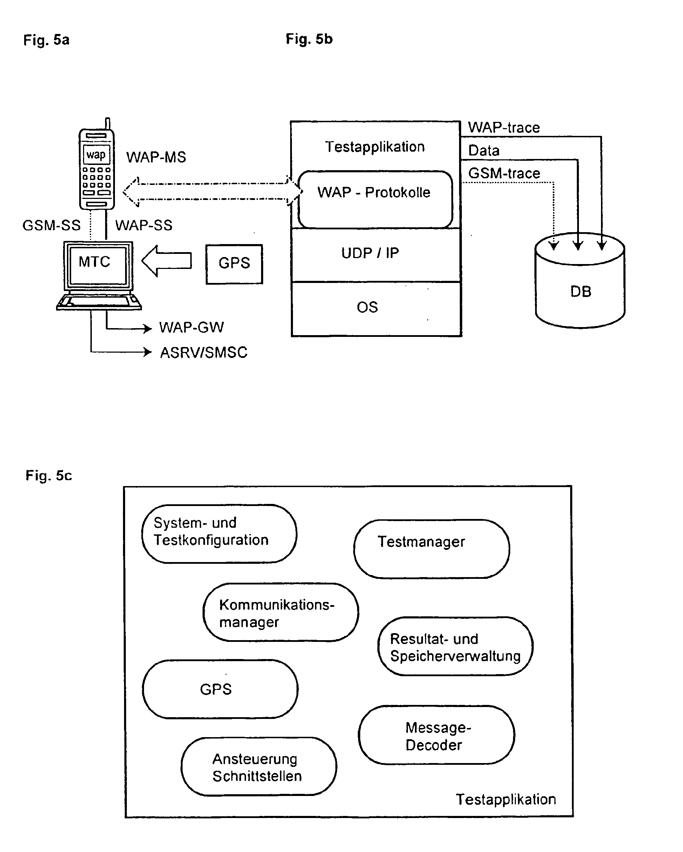

Die mobile Testeinheit MTC ist, wie in Figur 1 und 5a gezeigt, vorzugsweise mit einem WAP-Endgerät WAP-MS oder wie in Figur 2 gezeigt, mit einem Server ASRV, gegebenenfalls einem Short Message Service Centre SMSC, des Mobilfunknetzes PLMN oder direkt mit einem WAP-seitigen Eingang des WAP-Gateways WAP-GW verbunden.

Anhand der mobilen Testeinheit MTC können vom Managementsystem MMS geladenen Testsequenzen durchgeführt werden. Im einfachsten Fall wird ein einzelner WAP-Request ausgelöst und anschliessend eine dazu korrespondierende WAP-Reply empfangen. Anhand des Zeitgabesystems GPS werden die Zeitpunkte des Absendens und des Empfangs der Meldungen registriert.

Wie in Figur 5a gezeigt, ist die mobile Testeinheit MTC, die eine Testapplikation vorzugsweise mit einem WAP-Protokollstack aufweist, über eine erste Schnittstelle WAP-SS mit dem WAP-Endgerät WAP-MS verbunden, über die eine Kommunikation zwischen dem in der Testapplikation eingebundenen WAP-Protokollstack und dem WAP-Endgerat WAP-MS erfolgt. Möglich ist die Verwendung von mit Schnittstellen versehenen Testendgeräten WAP-MS ohne WAP-Protokollstack oder normalen WAP-Endgeräten WAP-MS mit WAP-Protokollstack. Sofern im WAP-Endgerät WAP-MS ein vollständiger WAP-Protokollstack vorhanden ist, kann in der Testapplikation auf einen WAP-Protokollstack und den Browser verzichtet werden. Eine Steuerung des WAP-Endgerätes WAP-MS durch die mobile Testeinheit erfolgt mittels Steuerkommandos, sogenannten AT-Kommandos, über die erste Schnittestelle WAP-SS. WAP-Tracedaten werden in diesem Fall vorzugsweise über eine weitere, beispielsweise die nachfolgend genannte zweite Schnittstelle GSM-SS zur mobilen Testeinheit MTC übertragen.

Vorzugsweise entnimmt die mobile Testeinheit MTC über die zweite Schnittstelle GSM-SS zusätzlich Tracedaten des Protokollstacks des Mobilfunknetzes PLMN und der Luftschnittstelle aus dem WAP-Endgerät WAP-MS.

Die in der mobilen Testeinheit MTC vorgesehene Testapplikation weist vorzugsweise die in Fig. 5c dargestellten Module auf und ist, wie in Figur 5b gezeigt, über den WAP-Protokollstack auf den UDP/IP Layer des Betriebssystems OS des verwendeten Rechners aufgesetzt.

Nach erfolgter Konfiguration des Systems empfängt die mobile Testeinheit MTC auszuführende Testsequenzen vom Managementserver MMS vorzugsweise über die Luftschnittstelle, das Internet oder das öffentliche Telefonnetz PSTN/ISDN. Vor dem Start einer Testsequenz wird gegebenenfalls Username und Passwort zum WAP-Gateway WAP-GW übertragen. Während des Tests werden, wie oben beschrieben, Tracedaten bzw. Daten des Verlaufs des Datenflusses vom WAP-Protokollstack, gegebenenfalls auch vom Protokollstack des Mobilfunknetzes PLMN und von der Luftschnittstelle aufgezeichnet und zusammen mit den GPS Informationen sowie Testparametern in einer Log-Datei LOG1 gespeichert.

Die in Figur 6a gezeigte erste stationäre Testeinheit STC1, die über zwei Netzwerkkarten WAP-NWC, WEB-NWC mit dem WAP-Gateway WAP-GW verbunden ist, weist eine mit einer Filterfunktion versehene Testapplikation auf. Mittels geeigneter Filtereinstellungen wird der von der mobilen Testeinheit MTC ausgelöste Datenfluss anhand der Netzwerkkarten WAP-NWC, WEB-NWC am WAP-seitigen und am Internet-seitigen Eingang des WAP-Gateways WAP-GW aufgezeichnet. Die aufgezeichneten Daten werden wiederum mit Zeitinformationen verknüpft und in einer oder mehreren Log-Dateien LOG2, LOG3 gespeichert. Ermöglicht wird der Zugriff auf den Datenfluss durch den Einsatz spezieller Treiber für die in der stationären Testeinheit STC1 verwendeten Netzwerkkarten WAP-NWC, WEB-NWC oder durch vorhandene Funktionen des Betriebssystems. Meldungen werden dabei vorzugsweise anhand der IP-Adresse des WAP-Endgeräts WAP-MS identifiziert, die als Ursprungs- oder Zieladresse in den lokalisierten Meldungen bzw. Datagrammen enthalten ist. Die IP-Adresse wird dem WAP-Endgerät WAP-MS dabei vom Managementsystem MMS zugeteilt.

Sofern die vom WAP-Gateway WAP-GW verursachten Verzögerungszeiten vernachlässigt werden können, kann der Verlauf des Datenflusses jedoch auch nur am WAP-seitigen oder am Internet-seitigen Eingang des WAP-Gateways WAP-GW registriert werden.

In einer vorzugsweisen Ausgestaltung der Erfindung wird der Datenfluss mittels einer zweiten stationären Testeinheit STC2 auch beim Web-Server WEB-SRV anhand der IP-Adresse des WAP-Endgeräts aufgezeichnet und in einer Log-Datei LOG4 gespeichert. Dies erlaubt eine präzisere Prüfung des Web-Servers WEB-SRV; insbesondere können dessen Verfügbarkeit und Antwortzeiten t(I-SRV) genau bestimmt werden.

Die stationären Testeinheiten STC1, STC2 können ferner in einem passiven Modus betrieben werden, in dem sie den Datenverkehr unter Anwendung wählbarer Filterfunktionen überwachen, ohne dass Testsequenzen initialisiert wurden. Dies erlaubt eine breitere Abstützung der Testresultate. Zudem kann die erfindungsgemässe Prüfvorrichtung daher auch zur allgemeinen Überwachung des Netzwerks eingesetzt werden.

Nach Ablauf der Testsequenzen werden die Log-Dateien LOG1, ..., LOG4 mit den registrierten Daten zum Managementsystem MMS zur weiteren Verarbeitung übertragen. Die Übertragung erfolgt dabei vorzugsweise über einen Kommunikationskanal des mobilen oder leitungsgebundenen öffentlichen Telefonnetzes PSTN oder das Internet.

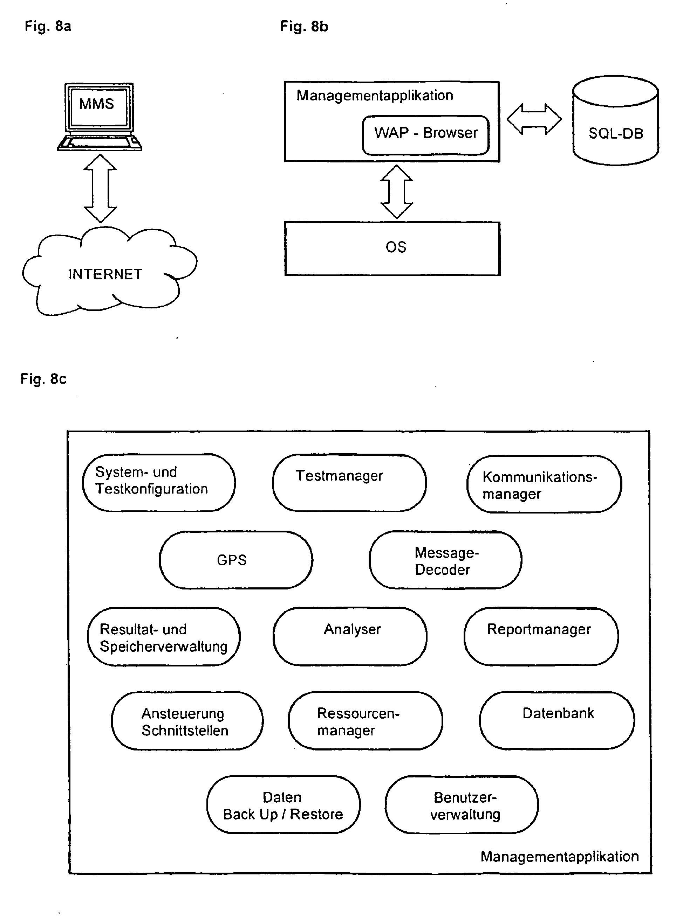

Das in Fig. 8a und 8b gezeigte Managementsystem MMS weist eine Client/Server Architektur auf und erlaubt daher mehreren Benutzern, gleichzeitig mit dem System zu arbeiten. Das Managementsystem MMS steuert und koordiniert die mobilen und die stationären Testeinheiten MTC, STC1, STC2 und übermittelt Testsequenzen zur Ausführung. Daten bzw. Log-Dateien LOG1, ..., LOG4, die von den mobilen und stationären Testeinheiten MTC, STC1, STC2 übermittelt werden, werden in einer Datenbank SQL-DB gespeichert.

Das Managementsystem MMS weist eine Managementapplikation mit verschiedenen, in Figur 8c gezeigten Funktionsmodulen auf, deren Funktionen bezeichnet sind. Eine eingebaute Benutzerverwaltung erlaubt das Erstellen von Benutzerprofilen und verhindert unbefugten Zugriff zu gespeicherten Daten. Mittels eines Analysemoduls erfolgt die Auswertung der mit den Log-Dateien LOG, ..., LOG4 übertragenen Messdaten, die erst hier unter Beizug der zugehörigen Zeitinformationen oder Zeitmarkierungen miteinander verglichen werden können. Anschliessend können Reports und Statistiken zuhanden von Anwendern, Dienstleistern oder Netzbetreibern produziert werden.

Das Managementsystem MMS beinhaltet vorzugsweise auch einen WAP-Browser, der zur Erstellung und Konfiguration von WAP-Tests vorteilhaft einsetzbar ist. Der Ablauf eines Tests kann durch manuelle Ausführung einzelner Aktionen festgelegt werden, die aufgezeichnet und gespeichert werden. Durch Aneinanderreihen einzelner Tests entstehen dann sogenannte Mess- oder Testkampagnen bzw. Testsequenzen, die gegebenenfalls in angepasster Form zu den mobilen und stationären Testeinheiten MTC, STC1, STC2 übertragen werden. Das Managementsystem teilt der mobilen Testeinheit MTC ferner eine IP-Adresse zu. Die IP-Adresse die in den Feldern Source Address und Destination Address von IP-Paketen benutzt wird, ist eindeutig. Keine Maschine hat dieselbe IP-Adresse wie eine andere (siehe [2], Seiten 446-447). Durch Filtern dieser IP-Adresse können die stationären Testeinheiten STC1, STC2 daher den von der mobilen Testeinheit MTC ausgelösten Datenfluss der Testsequenz aufzeichnen und abspeichern.

Das Managementsystem MMS kann die stationären Testeinheiten STC1, STC2 auch in den passiven Modus umschalten, für den das Managementsystem MMS die Filtereinstellung sowie weitere Parameter, wie die Zeitdauer der Aufzeichnung, Alarmschwellen und maximale Antwortzeiten, festlegt und zu den stationären Testeinheiten STC1, STC2 übermittelt.

Anhand der Messdaten werden im Managementsystem MMS Verzögerungen
- der Übertragung innerhalb des Mobilfunknetzes PLMN,
- der Übertragung innerhalb des Internets,
- der Verarbeitung und Übertragung der Meldungen (REQUEST/RESPONSE) innerhalb des WAP-Gateways WAP-GW,
- der Verarbeitung der Meldungen (REQUEST/RESPONSE) innerhalb des als Origin-Server dienenden Web-Servers WEB-SRV und gegebenenfalls des zur Verwaltung von IP-Adressen vorgesehenen DNS-Servers DNS-SRV,
- der Verarbeitung der Meldungen (REQUEST/REPLY) innerhalb des WAP-Endgeräts WAP-MS und/oder
- des Verbindungsaufbaus und gegebenenfalls Abbaus verbindungsorientierter Verbindungen bzw. logischer Verbindungen im Mobilfunknetz PLMN
festgestellt.

Anhand der Messdaten wird im Managementsystem MMS vorzugsweise auch
- die Paketverlustrate,
- die Datenübertragungsrate und/oder
- die Vefügbarkeit und/oder die Erreichbarkeit des als Origin-Server dienenden Web-Servers WEB-SRV
berechnet.

Für den WAP-Anwender besonders wichtig ist natürlich die Berechnung der Antwortzeit t(W-RSP) von der Abgabe eines WAP-Requests bis zum Erhalt einer WAP-Reply. Von Bedeutung ist ferner die Sitzungszeit t(I-HS) für den Auf- und Abbau einer Verbindung und zur Übertragung der angeforderten Inhalte zwischen dem WAP-Gateway WAP-GW und dem Web-Server WEB-SRV.

Das erfindungsgemässe Verfahren und die Vorrichtung erlauben daher die rasche Feststellung des Zustandes oder von Veränderungen des Netzwerks und angebotener Dienstleistungen sowie die Lokalisierung von Ursachen festgestellter Veränderungen. Besonders wertvoll für Dienstleister und Netzbetreiber sind die präzisen, gegebenenfalls durch Statistiken gestützten Informationen und Analysen, die es erlauben, Probleme innerhalb des Netzwerkes früh zu erkennen und beheben zu können. Indem bei den Analysen auch die übertragenen Inhalte in Relation zu den Messresultaten gesetzt werden, entsteht eine gesamtheitliche Prüfung des Netzwerks, welche auch Anbietern von Inhalten erlaubt, Angebote zu optimieren und die Zugriffszeiten zu publizierten Seiten zu reduzieren.
[1] Jerry D. Gibson, THE COMMUNICATIONS HANDBOOK, CRC PRESS, Boca Raton 1997
[2] Andrew S. Tanenbaum, Computernetzwerke, Prentice-Hall Inc., München 1998, 3. Auflage
[3] Wireless Application Protocol Forum, "Wireless Application Protocol Architecture Specification", Version vom 30. 04. 1998, herausgegeben über http://www.wapforum.org
[4] R. Sellin, Neue mobile Perspektiven mit WAP und GPRS, Der Fernmeldeingenieur, Verlag für Wissenschaft und Leben Georg Heidecker GmbH, Heft 5/'00, Erlangen 2000
[5] Richard C. Dorf, THE ELECTRICAL ENGINEERING HANDBOOK, CRC PRESS, Boca Raton 1997
[6] H. Orlamünder, IP und ATM, Der Fernmeldeingenieur, Verlag für Wissenschaft und Leben Georg Heidecker GmbH, Heft 4/'99, Erlangen 1999

## Patentansprüche

1. Verfahren zur Prüfung, gegebenenfalls Überwachung eines Netzwerks, das nach dem Wireless Application Protokoll WAP arbeitende WÄP-Endgeräte (WAP-MS) unterstützt und das einen WAP-Gateway (WAP-GW) aufweist, der ein Mobilfunknetz (PLMN) und ein nach den Internetprotokollen TCP/IP arbeitendes Netzwerk, das Internet oder ein Intranet, miteinander verbindet und der zur Adaption der Protokolle (WAP, HTTP) der übertragenen Meldungen (REQUEST/RESPONSE) dient, **dadurch gekennzeichnet, dass** eine Managementeinrichtung (MMS) vorgesehen ist, die zur Steuerung wenigstens einer ersten stationären Testeinheit (STC1) und einer mobilen Testeinheit (MTC) dient, mittels der einzeln oder parallel WAP-Requests ausgelöst, dazu korrespondierende WAP-Replies empfangen und die Zeitpunkte des Absendens und Empfangs der Meldungen registriert werden, wobei der Verlauf des Datenflusses der einzelnen oder parallel laufenden Kommunikationavorgänge zwischen der mobilen Testeinheit (MTC) und einem Web-Server (WEB-SRV) mittels der ersten stationären Testeinheit (STC1)
a) am WAP-seitigen Eingang des WAP-Gateways (WAP-GW), oder
b) am Internet-seitigen Eingang des WAP-Gateways (WAP-GW), oder
c) am WAP-seitigen Eingang und am Internet-seitigen Eingang des WAP-Gateways (WAP-GW)
und gegebenenfalls mittels einer zweiten stationären Testeinheit (STC2) am Web-Server (WEB-SRV) registriert wird, wonach die registrierten Daten zur Managementeinrichtung, (MMS) zur Verarbeitung übertragen werden.

2. Verfahren nach Anspruch 1, **dadurch gekennzeichnet, dass** die mobile Testeinheit (MTC) mit einem WAP-Endgerät (WAP-MS) verbunden ist, mittels dem WAP-Requests generiert und WAP-Replies empfangen werden.

3. Verfahren nach Anspruch 1 oder 2, **dadurch gekennzeichnet, dass** die mobile Testeinheit (MTC) gegebenenfalls von der Managementeinrichtung (MMS) eine IP-Adresse zugeteilt wird, mittels der der Datenverkehr zwischen der mobilen Testeinheit (MTC) und dem Web-Server (WEB-SRV) registriert wird.

4. Verfahren nach Anspruch 1, 2 oder 3, **dadurch gekennzeichnet, dass** die registrierten Daten mit Zeitinformationen verknüpft werden, die von einer gemeinsamen Zeitbasis, gegebenenfalls einer zeitlichen Referenz des Global Positioning Systems abgeleitet werden.

5. Verfahren nach einem der Ansprüche 1-4, **dadurch gekennzeichnet, dass** anhand der Messdaten in der Managementeinrichtung (MMS) Verzögerungen
a) der Übertragung innerhalb des Mobilfunknetzes (PLMN),
b) der Übertragung innerhalb des Internets,
c) der Verarbeitung und Übertragung der Meldungen (REQUEST/RESPONSE) innerhalb des WAP-Gateways (WAP-GW),
d) der Verarbeitung der Meldungen (REQUEST/RESPONSE) innerhalb des als Origin-Server dienenden Web-Servers (WEB-SRV) und gegebenenfalls des zur Verwaltung von IP-Adressen vorgesehenen DNS-Servers (DNS-SRV),
e) der Verarbeitung der Meldungen (REQUEST/REPLY) innerhalb des WAP-Endgeräts (WAP-MS) und/oder
f) des Verbindungsaufbaus und gegebenenfalls Abbaus logischer Verbindungen im Mobilfunknetz (PLMN) festgestellt werden.

6. Verfahren nach einem der Ansprüche 1-5, **dadurch gekennzeichnet, dass** anhand der Messdaten in der Managementeinrichtung (MMS)
a) die Paketverlustrate,
b) die Datenübertragungsrate und/oder
c) die Vefügbarkeit und/oder die Erreichbarkeit des als Origin-Server dienenden Web-Servers,(WEB-SRV)
berechnet werden.

7. Verfahren nach einem der Ansprüche 1-6, **dadurch gekennzeichnet, dass** anhand der Messdaten in der Managementeinrichtung (MMS) die Antwortzeit (t(W-RSP)) von der Abgabe eines WAP-Requests bis zum Erhalt einer WAP-Reply und/oder die entsprechende Sitzungszeit t(I-HS) für den Auf- und Abbau einer Verbindung und zur Übertragung der angeforderten Inhalte zwischen dem WAP-Gateway (WAP-GW) und dem Web-Server (WEB-SRV) berechnet wird.

8. Verfahren nach einem der Ansprüche 1-7, **dadurch gekennzeichnet, dass** der Verlauf des Datenflusses für verschiedene Inhalte und/oder Applikationen erfasst wird.

9. Verfahren nach einem der Ansprüche 1-8, **dadurch gekennzeichnet, dass** in Abhängigkeit der durch die Managementeinrichtung (MMS) ermittelten Resultate die Ressourcen des Netzwerks und die auf den geprüften Web-Servern (WEB-SRV) angebotenen Inhalte und/oder Applikationen optimiert werden.

10. Vorrichtung zur Prüfung, gegebenenfalls Überwachung eines Netzwerks, das nach dem Wireless Application Protokoll WAP arbeitende WAP-Endgeräte (WAP-MS) unterstützt und das einen WAP-Gateway (WAP-GW) aufweist, der ein Mobilfunknetz (PLMN) und ein nach den Internetprotokollen TCP/IP arbeitendes Netzwerk, das Internet oder ein Intranet, miteinander verbindet und der zur Adaption der Protokolle (WAP, HTTP) der übertragenen Meldungen (REQUEST/RESPONSE) dient, **dadurch gekennzeichnet, dass** eine Managementeinrichtung (MMS) vorgesehen ist, die über einen Kommunikationskanal mit wenigstens einer ersten stationären Testeinheit (STC1) und einer mobilen Testeinheit (MTC) verbunden ist, mittels der einzeln oder parallel WAP-Requeste auslösbar, dazu korrespondierende WAP-Replies empfangbar und die Zeitpunkte des Absendens und Empfangs der Meldungen registrierbar sind, dass der Verlauf des Datenflusses der einzelnen oder parallel laufenden Kommunikationsvorgänge zwischen der mobilen Testeinheit (MTC) und einem Web-Server (WEB-SRV) mittels der stationären Testeinheit (STC1)
a) am WAP-seitigen Eingang des WAP-Gateways (WAP-GW), oder
b) am Internet-seitigen Eingang des WAP-Gateways (WAP-GM), oder
c) am WAP-seitigen Eingang und am Internet-seitigen Eingang des WAP-Gateways (WAP-GW)
und gegebenenfalls mittels einer zweiten stationären Testeinheit (STC2) am Web-Server (WEB-SRV) registrierbar ist und dass registrierte Daten zur Managementeinrichtung (MMS) zur weiteren Verarbeitung übertragbar sind.

11. Vorrichtung nach Anspruch 10, **dadurch gekennzeichnet, dass** die mobile Testeinheit (MTC) entweder mit einem WAP-Endgerät (WAP-MS), einem Server (ASRV) des Mobilfunknetzes (PLMN) oder direkt mit einem WAP-seitigen Eingang des WAP-Gateways (WAP-GW) verbunden ist.

12. Vorrichtung nach Anspruch 10 oder 11, **dadurch gekennzeichnet, dass** die mobilen und stationären Testeinheiten (MTC, STC1, STC2) mit einer Zeitgabeeinheit (GPS) verbunden sind, mittels der die gemessenen Daten mit Zeitinformationen verknüpft werden können, die von einer gemeinsamen Zeitbasis, gegebenenfalls einer zeitlichen Referenz des Global Positioning Systems abgeleitet sind.

13. Vorrichtung nach Anspruch 10, 11 oder 12, **dadurch gekennzeichnet, dass** die mobile Testeinheit (MTC) eine Testapplikation mit einem WAP-Protokollstack aufweist, über den die mobile Testeinheit (MTC) über eine erste Schnittstelle mit dem WAP-Endgerät (WAP-MS) kommuniziert oder dass die mobile Testeinheit (MTC) eine Testapplikation ohne WAP-Protokollstack aufweist und das mit einem WAP-Protokollstack versehene WAP-Endgerät (WAP-MS) über eine erste Schnittstelle steuert und dass die mobile Testeinheit (MTC) gegebenenfalls über eine zweite Schnittstelle mit dem WAP-Endgerät (WAP-MS) verbunden ist, über die Daten aus dem im WAP-Endgerät (WAP-MS) vorgesehenen Protokollstack des Mobilfunknetzes (PLMN) entnehmbar sind.

14. Vorrichtung nach einem- der Ansprüche 10-13, **dadurch gekennzeichnet, dass** die erste stationäre Testeinheit (STC1), die über eine Netzwerkkarte mit dem WAP-Gateway (WAP-GW) verbunden ist, eine Testapplikation aufweist, die mittels eines Filters, Daten des von der mobilen Testeinheit (MTC) ausgelösten Datenverkehrs erfassen kann.

15. Vorrichtung nach einem der Ansprüche 10-14, **dadurch gekennzeichnet, dass** die Managementeinrichtung (MMS) zur Steuerung von zwei öder mehreren mobilen und stationären Testeinheiten (MTC, STC1, STC2) sowie zur Übertragung von Testinstruktionen zu sowie zum Empfang und zur Auswertung registrierter Daten von den mobilen und stationären Testeinheiten (MTC, STC1, STC2) geeignet ist.

16. Vorrichtung nach einem der Anspruche 9-15, **dadurch gekennzeichnet, dass** die mobilen und stationären Testeinheiten (MTC, STC1, STC2) über das geprüfte Netzwerk oder über separate Kommunikationaverbindungen, gegebenenfalls über ein mobiles oder drahtgebundenes öffentliches Telefonnetz (GSM, PSTN) oder das Internet mit der Managementeinrichtung (MMS) verbunden sind.

## Claims

1. Method for testing, if appropriate monitoring a network, that supports WAP-terminals (WAP-MS), which are operating according to the Wireless Application Protocol WAP, and that comprises a WAP-gateway (WAP-GW), which connects a mobile communication network (PLMN) and a network operating according to the Internet protocols TCP/IP, the Internet or am Intranet, and which serves for the adaptation of the protocols (WAP, HTTP) of the messages (REQUEST/RESPONSE), which are to be transferred, **characterised in that** a management device (MMS) is provided, that serves for controlling at least a first stationary test unit (STC1) and a mobile test unit (MTC), with which individual or parallel WAP-Requests are released, thereto corresponding WAP-Replies are received and the time points of sending and receiving the messages are registered, whereas the course of the data flow of the individual or parallel running communication processes between the mobile test unit (MTC) and a web-Server (WEB-SRV) is registered by means of first stationary test unit (STC1)
a) at the WAP-sided input of the WAP-gateway (WAP-GW), or
b) at the Internet-sided input of the WAP-gateway (WAP-GW), or
c) at the WAP-sided input and at the Internet-sided input of the WAP-gateway (WAP-GW)
and, if appropriate, by means of a secondary stationary test unit (STC2) at the web-server (WEB-SRV), whereupon the registered data are transferred to the management device (MMS) for further processing.

2. Method according to claim 1, **characterised in that** the mobile test unit (MTC) is connected with a WAP-terminal (WAP-MS), with which the WAP-requests are generated and WAP-Replies are received.

3. Method according to claim 1 or 2, **characterised in that** the mobile test unit (MTC) is assigned, if appropriate by the management device (MMS), an IP-address, with which the data traffic between the mobile test unit (MTC) and the web-server (WEB-SRV) is registered.

4. Method according to claim 1, 2 or 3, **characterised in that** the registered data are combined with time information, which are derived from a common time base, if appropriate a chronological reference of the global positioning system.

5. Method according to one of claims 1-4, **characterised in that** by means of the measurement data delays
a) of the transmission within the mobile communication network (PLMN),
b) of the transmission within the Internet,
c) of the processing and transmission of the messages (REQUEST/RESPONSE) within the WAP-gateway (WAP-GW),
d) of the processing of the messages (REQUEST/RESPONSE) within the web-server (WEB-SRV) that serves as origin-server and, if appropriate, of the DNS-server (DNS-SRV) that is provided for the management of IP-addresses,
e) of the processing of the messages (REQUEST/REPLY) WAP-terminals (WAP-MS) and/or
f) of the setup of connections and, if appropriate, of the release of logical connections within the mobile communication network (PLMN),
are determined in the management device (MMS).

6. Method according to one of claims 1-5, **characterised in that** the management device (MMS) calculates by means of the measurement data
a) the packet loss rate,
b) the data transfer rate and/or
c) the availability and/or the reachability of the web-server (WEB-SRV) that serves as origin-server.

7. Method according to one of claims 1-6, **characterised in that** the management device (MMS) calculates, by means of the measurement data, the response time (t(W-RSP)) from the despatch of a WAP-request up to the receipt of a WAP-reply and/or the corresponding session time (I-HS) for the setup and release of a connection and for the transfer of the requested contents between the WAP-gateway (WAP-GW) and the web-server (WEB-SRV).

8. Method according to one of claims 1-7, **characterised in that** the course of the data flow is recorded for different contents and/or applications.

9. Method according to one of claims 1-8, **characterised in that**, depending on the results acquired by the management device (MMS), the resources of the network and the contents, that are offered on the tested web-servers (WEB-SRV), and/or applications are optimised.

10. Apparatus for testing, if appropriate, monitoring a network, that supports WAP-terminals (WAP-MS), which are operating according to the Wireless Application Protocol WAP, and that comprises a WAP-gateway (WAP-GW), which connects a mobile communication network (PLMN) and a network operating according to the Internet protocols TCP/IP, the Internet or am Intranet, and which serves for the adaptation of the protocols (WAP, HTTP) of the messages (REQUEST/RESPONSE), which are to be transferred, **characterised in that** a management device (MMS) is provided, that is connected via communication channel with at least a first stationary test unit (STC1) and a mobile test unit (MTC), with which individual or parallel WAP-requests can be released, thereto corresponding WAP-replies can be received and the time points of sending and receiving the messages can be registered, that the course of the data flow of the individual or parallel running communication processes between the mobile test unit (MTC) and a web-Server (WEB-SRV) can be registered by means of first stationary test unit (STC1)
a) at the WAP-sided input of the WAP-gateway (WAP-GW), or
b) at the Internet-sided input of the WAP-gateway (WAP-GW), or
c) at the WAP-sided input and at the Internet-sided input of the WAP-gateway (WAP-GW)
and, if appropriate, by means of a secondary stationary test unit (STC2) at the web-server (WEB-SRV), and that the registered data can be transferred to the management device (MMS) for further processing.

11. Apparatus according to claim 10, **characterised in that** the mobile test unit (MTC) is connected either with a WAP-terminal (WAP-MS), a server (ASRV) of the mobile communication network (PLMN) or directly with a WAP-sided input of the WAP-gateway (WAP-GW).

12. Apparatus according to claim 10 or 11, **characterised in that** the mobile and stationary test units (MTC, STC1, STC2) are connected to a time providing unit (GPS), with which the measured data can be combined with time information, which can be derived from a common time base, if appropriate, a chronological reference of the global positioning system.

13. Apparatus according to claim 10, 11 or 12, **characterised in that** the mobile test unit (MTC) comprises a test application with a WAP-protocol stack, via which the mobile test unit (MTC) communicates across a first interface with the WAP-terminal (WAP-MS) or
that the mobile test unit (MTC), that comprises a test application without a WAP-protocol stack, controls the WAP-terminal (WAP-MS), that comprises a WAP-protocol stack, over a first interface and
that the mobile test unit (MTC), if appropriate, via a second interface, is connected to the WAP-terminal (WAP-MS), over which data can be retrieved from the protocol stack of the mobile communication network (PLMN) that is provided in the WAP-terminal (WAP-MS).

14. Apparatus according to one of the claims 10-13, **characterised in that** die first stationary test unit (STC1), that is connected via a network card to the WAP-gateway (WAP-GW), comprises a test application, which, by means of a filter, can record data of the data traffic released by the mobile test unit (MTC).

15. Apparatus according to one of the claims 10-14, **characterised in that** the management device (MMS) is capable of controlling two or more mobile and stationary test units (MTC, STC1, STC2) as well as for transmitting test instructions to mobile and stationary test units (MTC, STC1, STC2) as well as for receiving and evaluating of registered data from the mobile and stationary test units (MTC, STC1, STC2).

16. Apparatus according to one of the claims 9-15, **characterised in that** the mobile and stationary test units (MTC, STC1, STC2) are connected via the tested network or via separate communication connections, if appropriate, via a mobile or a wired public telephone network (GSM, PSTN) or the Internet with the management device (MMS).

## Revendications

1. Procédé pour la vérification, éventuellement la surveillance d'un réseau qui supporte des terminaux Wap (WAP-MS) fonctionnant selon le protocole d'application sans fil WAP et qui présente une passerelle WAP (WAP-GW), qui relie entre eux un réseau de radiotéléphonie mobile (PLMN) et réseau fonctionnant selon les protocoles Internet TCP/IP, l'Internet ou un Intranet et sert à l'adaptation des protocoles (WAP, HTTP) des messages transmis (REQUEST/RESPONSE) **caractérisé en ce qu'**il est prévu un dispositif de gestion (MMS), qui sert à la commande d'au moins une unité de test stationnaire (STC1) et d'une unité de test mobile (MTC), au moyen duquel des requêtes WAP uniques ou parallèles sont déclenchées, des réponse WAP correspondantes sont reçues et les moments de l'envoi et de la réception des messages sont enregistrés, l'évolution du flux de données des opérations de communication uniques ou parallèles entre l'unité de test mobile (MTC) et un serveur WEB (WEB-SRV) étant enregistrée au moyen de la première unité de test stationnaire (STC1)
a) à l'entrée WAP de la passerelle WAP (WAP-GW), ou
b) à l'entrée internet de la passerelle WAP (WAP-GW), ou
c) à l'entrée WAP et à l'entrée internet de la passerelle WAP (WAP-GW)
et le cas échéant au moyen d'une seconde unité de test stationnaire (STC2) sur le serveur WEB (WEB-SRV), sur quoi les données enregistrées étant ensuite transmises au dispositif de gestion (MMS) pour le traitement.

2. Procédé selon la revendication 1, **caractérisé en ce que**, l'unité mobile de test (MTC) est reliée au terminal WAP (WAP-MS) au moyen duquel sont générées des requêtes WAP et sont reçues des réponses WAP.

3. Procédé selon la revendication 1 ou 2, **caractérisé en ce que** l'unité mobile de test (MTC) est associée par le dispositif de gestion (MMS) à une adresse IP au moyen de laquelle est enregistré le trafic de données entre l'unité mobile de test (MTC) et le serveur Web (WEB-SRV).

4. Procédé selon la revendication 1, 2 ou 3, **caractérisé en ce que** les données enregistrées sont associées à des informations de temps qui sont dérivées d'une base temporelle commune, éventuellement d'une référence temporelle du Global Positioning System (système global de positionnement).

5. Procédé selon l'une des revendications 1 à 4, **caractérisé en ce qu'**il est constaté à l'aide des données de mesures dans le dispositif de gestion (MMS) des retards
a) de transmission au sein du réseau de radiotéléphonie mobile (PLMN),
b) de transmission sur Internet,
c) de traitement et de transmission des messages (REQUEST/RESPONSE) au sein de la passerelle WAP (WAP-GW),
d) le traitement des messages (REQUEST/RESPONSE) au sein du serveur WEB (WEB-SRV) servant de serveur d'origine et éventuellement du serveur DNS (DNS-SRV) prévu pour la gestion d'adresses IP,
e) du traitement des messages (REQUEST/REPLY) au sein du terminal WAP (WAP-MS) et/ou
f) de l'établissement et/ou éventuellement de la rupture de connexions logiques dans le réseau de radiotéléphonie mobile (PLMN).

6. Procédé selon l'une des revendications 1-5, **caractérisé en ce qu'**à l'aide des données dans le dispositif de gestion (MMS), il est calculé
a) des débits de pertes de paquets,
b) des débits de transmissions de données et/ou
c) la disponibilité et/ou l'accessibilité du serveur Web servant de serveur d'origine (WEB-SRV).

7. Procédé selon l'une des revendications 1 à 6, **caractérisé en ce qu'**à l'aide des données de mesures dans le dispositif de gestion (MMS), il est calculé le temps de réponse (t(W-RSP)) de l'émission d'une requête jusqu'à la réception d'une réponse WAP et/ou le temps de session correspondant t(I-HS) pour l'établissement et l'interruption d'une connexion et pour la transmission des contenus demandés entre la passerelle WAP (WAP-GW) et le serveur WEB (WEB-SRV).

8. Procédé selon l'une des revendications 1 à 7, **caractérisé en ce que** l'évolution du flux de données pour différents contenus et/ou applications est saisi.

9. Procédé selon l'une des revendications 1 à 8, **caractérisé en ce qu'**en fonction de résultats déterminés par le dispositif de gestion (MMS) les ressources du réseau et les contenus et/ou applications proposés sur les serveurs WEB vérifiés (WEB-SRV) sont optimisés.

10. Dispositif pour la vérification, éventuellement la surveillance d'un réseau qui supporte des terminaux Wap (WAP-MS) fonctionnant selon le protocole d'application sans fil WAP et qui présente une passerelle WAP (WAP-GW), qui relie entre eux un réseau de radiotéléphonie mobile (PLMN) et un réseau fonctionnant selon les protocoles Internet TCP/IP, l'Internet ou un Intranet et sert à l'adaptation des protocoles (WAP, HTTP) des messages transmis (REQUEST/RESPONSE) **caractérisé en ce qu'**il est prévu un dispositif de gestion (MMS), qui est relié par un canal de communication à au moins une première unité test stationnaire (STC1) et une unité test mobile (MTC) au moyen desquelles des requêtes WAP peuvent être déclenchées, des réponses correspondantes peuvent être reçues et les moments d'envoi et de réception de messages sont enregistrables, **en ce que** le flux de données des opérations de communication uniques ou parallèles entre l'unité mobile de test (MTC) et un serveur WEB (WEB-SRV) au moyen de l'unité test stationnaire (STC1)
a) à l'entrée WAP de la passerelle WAP (WAP-GW), ou
b) à l'entrée Internet d la passerelle WAP (WAP-GW), ou
c) à l'entrée WAP et à l'entrée Internet de la passerelle WAP (WAP-GW)
et le cas échéant au moyen d'une seconde unité test stationnaire (STC2) sur le serveur WEB (WEB-SRV), sur quoi les données enregistrées sont transmissibles au dispositif de gestion (MMS) pour le traitement.

11. Dispositif selon la revendication 10, **caractérisé en ce que** l'unité de test mobile (MTC) est reliée soit à un terminal WAP (WAP-MS), un serveur WAP (ASRV) du réseau de radiotéléphonie mobile (PLMN) ou directement à une entrée WAP de la passerelle WAP (WAP-GW).

12. Dispositif selon la revendication 10 ou 11, **caractérisé en ce que** les unités de test mobiles et stationnaire (MTC, STC1, STC2) sont reliées à une unité d'indication de temps (GPS) qui permettent de relier les données mesurées aux informations de temps qui sont dérivées d'une base commune de temps, éventuellement d'une référence commune de temps le cas échéant d'ne référence temporelle du système de positionnement global.

13. Dispositif selon la revendication 10, 11 ou 12, **caractérisé en ce que** l'unité test mobile (MTC) présente une application de test avec une pile de protocoles WAP par laquelle communique l'unité test mobile (MTC) via une première interface au terminal WAP (WAP-MS) ou **en ce que** l'unité mobile test (MTC) présente une application de test sans pile de protocoles WAP et commande le terminal WAP (WAP-MS) muni d'une pile de protocoles WAP par une première interface et **en ce que** l'unité mobile test (MTC) est reliée le cas échéant par une seconde interface au terminal WAP (WAP-MS) par laquelle des données peuvent être déduites de la pile de protocole du réseau de radiotéléphonie mobile (PLMN), prévue dans le terminal WAP (WAP-MS).

14. Dispositif selon l'une des revendications 10 à 13, **caractérisé en ce que** la première unité de test stationnaire (STC1), qui est reliée par une carte réseau à la passerelle WAP (WAP-GW) présente une application test qui peut saisir au moyen d'un filtre, des données du trafic déclenché par l'unité test mobile (MTC).

15. Dispositif selon l'une des revendications 10 à 14, **caractérisé en ce que** le dispositif de gestion (MMS) est approprié à la commande de deux ou plusieurs unités de test mobiles ou stationnaires (MTC, STC1, STC2) ainsi que pour la transmission d'instructions de test ainsi que pour la réception et l'analyse de données des unités test stationnaires et mobiles (MTC, STC1, STC2).

16. Dispositif selon l'une des revendications 10 à 14, **caractérisé en ce que** les unités test mobiles et stationnaires (MTC, STC1, STC2) sont reliées par le réseau vérifié ou par les connexions de communication séparées, éventuellement par un réseau téléphonique publique mobile ou filaire (GSM, PSTN) ou par Internet au dispositif de gestion (MMS).
